# EUROPÄISCHE PATENTSCHRIFT

(11) **EP 1 780 432 B1**
(45) Veröffentlichungstag und Bekanntmachung des Hinweises auf die Patenterteilung: **08.10.2008**
(21) Anmeldenummer: 05023302.2
(22) Anmeldetag: 25.10.2005
(51) Int. Cl.: F16D 13/04, F16D 13/54

(54) **Fahrzeugkupplung, insbesondere Motorradkupplung**
Vehicle clutch, in particular for motorcycle
Embrayage d'un véhicule, en particulier pour motocyclette

(43) Veröffentlichungstag der Anmeldung: 02.05.2007
(73) Patentinhaber: Hoerbiger Antriebstechnik GmbH, 86956 Schongau (DE)
(72) Erfinder: Ruprecht, Georg, 87640 Biessenhofen (DE); Nickel, Falk, 86925 Fuchstal (DE)
(74) Vertreter: Schmitz, Hans-Werner

(56) Entgegenhaltungen:
- EP-A- 0 854 304
- US-A- 4 645 049
- US-A- 5 720 375
- PATENT ABSTRACTS OF JAPAN Bd. 010, Nr. 029 (M-451), 5. Februar 1986 (1986-02-05) & JP 60 184721 A (SUZUKI JIDOSHA KOGYO KK), 20. September 1985 (1985-09-20)

## Beschreibung

Die Erfindung betrifft eine Fahrzeugkupplung, insbesondere eine Motorradkupplung, gemäß dem Oberbegriff des Anspruches 1.

Fahrzeugdrehmomente, insbesondere von Motorrädern, sind in den letzten Jahren immer weiter angestiegen. Aus diesem Grund nehmen auch die Betätigungskräfte von Kupplungen immer weiter zu. Gleichzeitig richten sich Motorradhersteller vermehrt an weibliche Kunden, um ihren Marktanteil weiter auszubauen. Daraus ergibt sich die Notwendigkeit, mit geeigneten Maßnahmen den Komfort für den Fahrer bzw. die Fahrerin durch eine niedrige Kupplungshandkraft zu steigern.

Gleichzeitig führen die oben genannten hohen übertragbaren Momente der Kupplung zu dem Sicherheitsproblem, dass das Hinterrad im Schubbetrieb zu stempeln beginnen kann, wenn beispielsweise auf hohe Drehzahl zurückgeschaltet wird. Dies kann vom Prinzip her vermieden werden, wenn die Kupplung im Schubbetrieb geöffnet oder im Schlupf betrieben wird. Geübte Fahrer können dies durch fein dosiertes Ziehen des Kupplungshebels selbst tun. Um jedoch das Risiko für alle Fahrer zu minimieren, ist der Einsatz eines automatisch einsetzbaren Mechanismus wünschenswert, der die Kupplung im Schubbetrieb zumindest teilweise öffnet.

Auf dem Markt bekannte Kupplungssysteme bringen im Schubbetrieb eine Zusatzkraft auf die Druckplatte bzw. den Kolben der Kupplung in entgegengesetzter Richtung zur Federkraft auf, um die Kupplung zu öffnen. Dabei wird durch das Abheben der Druckplatte immer eine Rückwirkung auf den Kupplungshebel erzeugt, was für den Fahrer als störend empfunden wird. Ferner arbeiten diese Kupplungssysteme mit zusätzlichen Federn, wodurch sich die Herstellkosten erhöhen.

Aus der US 4,645,049 A ist eine Fahrzeugkupplung mit zwei Reibsystemen in Form von Reibscheibenanordnungen bekannt, die eine Druckplatte aufweist, die auf einer der Reibscheibenanordnungen drückt. Ein Innenteil der bekannten Kupplung weist eine außenliegende Aufnahmeplatte und eine innenliegende Nabe auf, die auf einer Welle fixiert ist.

Es ist daher Aufgabe der vorliegenden Erfindung, eine Fahrzeugkupplung, insbesondere Motorradkupplung, der im Oberbegriff des Anspruches 1 angegebenen Art zu schaffen, die auf einfache und für den Fahrer komfortbetonte Art und Weise ein zumindest teilweises Öffnen der Kupplung im Schubbetrieb ermöglicht.

Die Lösung dieser Aufgabe erfolgt durch die Merkmale des Anspruchs 1.

Erfindungsgemäß wird die degressive Federkennlinie der Kupplungsfeder in Kombination mit einer eine schiefe Ebene bildender Rampenanordnung zwischen der Lagerung der Feder und einem Innenteil des zweiteilig ausgeführten Mitnehmers genutzt, um eine Schubmomentbegrenzung ohne Rückwirkung auf die manuelle Kupplungsbetätigung zu erreichen.

Zu den besonderen Vorteilen der erfindungsgemäßen Kupplung gehört eine geringe Komplexität und dadurch geringe Herstellkosten.

Ferner ist ein sensibles Auslösen der Begrenzungsfunktion möglich, da die Abstützkraft mit dem Betätigungsweg abnimmt.

Schließlich wird die oben bereits erwähnte Vermeidung einer Rückwirkung auf die manuelle Betätigungskraft bzw. den Betätigungsweg erreicht.

Die Unteransprüche haben vorteilhafte Weiterbildungen der Erfindung zum Inhalt.

Vom Prinzip her ist es möglich, zum Lösen der Kupplung das Fahrzeugschubmoment zu verwenden.

In einer erfindungsgemäßen Variante kann die Kupplung auch parallel oder seriell aktiv umgesetzt werden Dabei ersetzt ein Aktuator das Fahrzeugschubmoment. In Verbindung mit der schiefen Ebene kann auf diese Weise jederzeit das übertragene Drehmoment minimiert werden. Z.B. ist bereits bei kleinem Fahrzeugschubmoment, welches auf glattem Untergrund bereits Probleme verursacht, eine Entkopplung unter Zuhilfenahme eines Aktuators ausreichend sicher möglich.

Zu den Vorteilen einer derartigen durch Aktuator erreichten aktiven Ausführung zählt ebenfalls eine geringe Komplexität und dadurch geringe Kosten.

Auch bei diesem System wird eine Rückwirkung auf die Betätigungskraft bzw. den Betätigungsweg der Kupplung vermieden.

Obwohl die erfindungsgemäße Fahrzeugkupplung insbesondere bei Motorrädern besondere Vorteile zeigt, ist der Einsatz auch bei anderen durch Motoren angetriebenen Fahrzeugen (z.B. ATVs) möglich.

Weitere Einzelheiten, Vorteile und Merkmale der vorliegenden Erfindung ergeben sich aus nachfolgender Beschreibung der beigefügten Zeichnung anhand der Figuren. Es zeigt:
- Fig. 1: eine Schnittdarstellung einer erfindungsgemäßen Kupplung,
- Fig. 2: eine Schnittdarstellung der Kupplung gemäß Fig. 1 entlang der Linie A-A in Fig. 1, und
- Fig. 3: das in Fig. 1 angegebene Detail B der erfindungsgemäßen Kupplung.

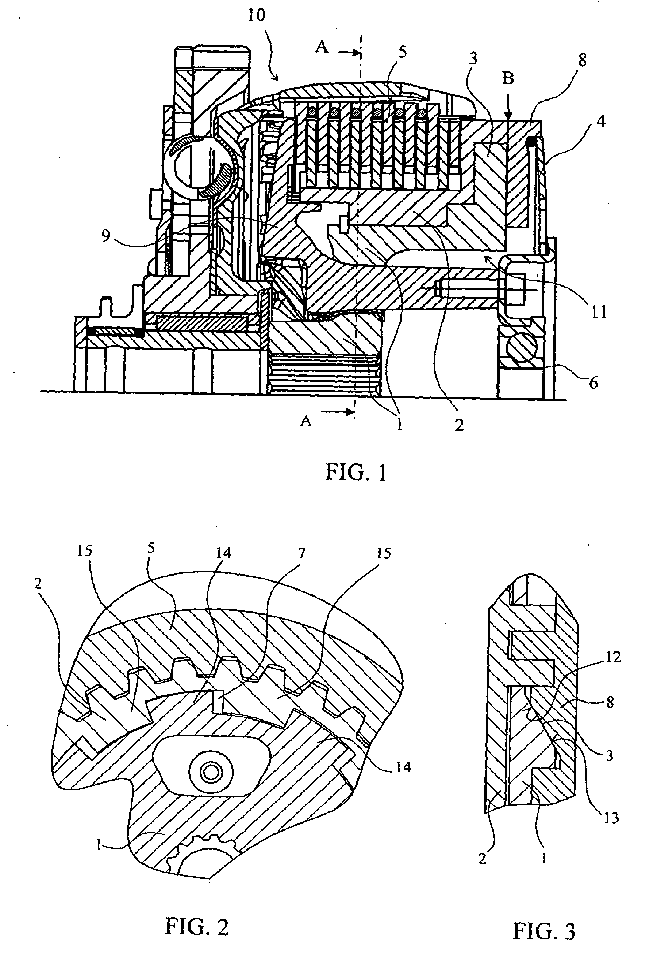

Die in Fig. 1 dargestellte erfindungsgemäße Kupplung 10 ist eine Fahrzeugkupplung, insbesondere in Form einer Motorradkupplung. Die Kupplung 10 weist neben den auch bei konventionellen Kupplungen vorgesehenen Teilen, die hier nicht näher erläutert werden, da sie für die Erklärung der Prinzipien der Erfindung nicht erforderlich sind, ein Reibsystem, insbesondere in Form eines Lamellenpaketes 5 auf, das mit einem Mitnehmer 11 in Wirkverbindung steht.

Ferner ist eine Feder 4 vorgesehen, die über eine Lagerung 8 auf den Mitnehmer 11 wirkt.

Erfindungsgemäß ist der Mitnehmer 11 zweiteilig ausgeführt und weist ein Innenteil bzw. eine Nabe 1 und ein Außenteil 2 auf, das gegenüber dem Innenteil 1 um einen definierten Verdrehwinkel verdrehbar angeordnet ist. Dieser Verdrehwinkel ist in Fig. 2 durch den dort eingezeichneten Freiraum 7 zwischen Nocken des Innenteils 1 und des Außenteils 2 symbolisiert, wobei beispielhaft jeweils zwei Nocken 14 des Innenteils 1 und zwei Nocken 15 des Außenteils 2 mit den jeweiligen Bezugsziffern gekennzeichnet sind.

Erfindungsgemäß weist die Feder 4 eine degressive Federkennlinie auf.

Die Lagerung 8 und das Innenteil 1 des Mitnehmers 11 stehen mit einer über in Fig. 1 mit der Bezugsziffer 3 symbolisierte schiefe Ebene bzw. Rampenanordnung in Wirkverbindung, wobei die schiefe Ebene 3 in Fig. 3 im Detail dargestellt ist.

Demgemäß weist die schiefe Ebene 3 eine Flächenanördnung einer Schrägfläche 12 der Lagerung 8 und einer Schrägfläche 13 des Innenteils 1 auf, wie sich dies durch die Detaildarstellung in Fig. 3 und des Details B in Fig. 1 im Einzelnen ergibt. Die schiefe Ebene bzw. Rampenanordnung 3 bzw. deren Schrägflächen 12 und 13 sind hierbei schräg zu einer Planfläche angeordnet, die wiederum senkrecht zur Rotationsachse der Kupplung 10 steht.

Da der Mitnehmer 11 der erfindungsgemäßen Kupplung 10 zweiteilig ausgeführt ist, kann das Innenteil bzw. die Nabe 1 des Mitnehmers 11 gegenüber dem Außenteil 2 um den zuvor erläuterten definierten Winkel 7 verdreht werden. Im Ruhezustand der Kupplung 10 und im Zugbetrieb liegen die aus Fig. 2 ersichtlichen Nocken 14 bzw. 15 des Innen- bzw. Außenteils 1 bzw. 2 aneinander an und es kann das volle Kupplungsmoment übertragen werden.

Im Schubbetrieb verdreht sich beispielsweise durch Ausnutzen des Fahrzeugschubmoments das Innenteil 1 gegenüber dem Außenteil 2 und es kommen nach Verdrehung um den definierten Verdrehwinkel 7 jeweils die Rückseiten der Nocken 14 bzw. 15 zur Anlage. Durch das Verdrehen wird über die schiefe Ebene 3 zwischen der Lagerung 8 und dem Innenteil 1 die Feder 4 mit ihrer degressiven Kennlinie weiter vorgespannt. Aufgrund der degressiven Kennlinie wird dadurch die Normalkraft der Feder 4 auf das Reibsystem 5 gesenkt, wodurch wiederum das übertragbare Schubmoment der Kupplung 10 abgesenkt wird. Dadurch kann die Kupplung 10 bereits bei niedrigen Schubmomenten rutschen. Dabei bleiben die Schnittstellen zur Betätigungseinheit, z.B. einem Nehmerzylinder 6 der Kupplung 10 unverändert, so dass sich keine Rückwirkungen auf die Fahrerhand am Kupplungshebel ergeben.

Mit anderen Worten zeichnet sich die erfindungsgemäße Kupplung 10 durch die Verknüpfung einer mechanischen Rampenkonstruktion (schiefe Ebene 3) mit der Feder, insbesondere Tellerfeder 4, aus, die eine degressive Charakteristik hat. Dabei wird nicht die Druckplatte 9 der Kupplung abgehoben, sondern die Lagerung 8 bzw. das Federauflager der Tellerfeder 4 wird verschoben, wodurch die Feder 4 weiter vorgespannt wird. Durch die degressive Kennlinie sinkt dabei jedoch die Vorspannkraft der Feder 4 auf die Druckplatte 9 und damit auf das Reibsystem 5, wodurch die Kupplung 10 leichter durchrutschen und damit das Schubmoment definiert begrenzt werden kann.

Zudem wird vorteilhafterweise bei der erfindungsgemäßen Kupplung 10 die Druckplatte 9 nicht bewegt, d.h., dass es keine störende Rückwirkung auf die Fahrerhand am Kupplungshebel gibt, was zuvor bereits erläutert wurde.

In einer aktiven Ausführungsvariante der erfindungsgemäßen Kupplung 10, die in den Figuren nicht näher dargestellt ist, wird das Innenteil 1 zusätzlich oder ausschließlich mit einem geeigneten Aktuator, vorzugsweise elektrisch oder hydraulisch, gegenüber dem Außenteil 2 verdreht. Der Aktuator stellt dabei das gewünschte begrenzte Übertragungsmoment über den definierten Winkel ein. Die Aktion des Aktuators kann beispielsweise durch Erfassen des jeweiligen Erfordernisses, z.B. einer ABS-Aktion, einer Drosselklappenstellung, einer Raddrehzahl, usw., eingeleitet werden.

Zur Ergänzung der Offenbarung wird neben der vorstehenden schriftlichen Beschreibung hiermit ausdrücklich auf die zeichnerische Darstellung gemäß der Fig. 1 bis 3 Bezug genommen und auf diese verwiesen.

### Bezugszeichenliste

- 1: Innenteil/Nabe
- 2: Außenteil
- 3: Schiefe Ebene/Rampenanordnung
- 4: Feder/Tellerfeder
- 5: Reibsystem
- 6: Nehmerzylinder
- 7: Freiraum gemäß Fig. 2 zur Symbolisierung des Drehwinkels
- 8: Lagerung/Federauflager
- 9: Druckplatte
- 10: Kupplung
- 11: Mitnehmer
- 12: Schrägflächen der schiefen Ebene 3
- 13: Schrägflächen der schiefen Ebene 3
- 14: Nocken
- 15: Nocken

## Patentansprüche

1. Fahrzeugkupplung (10), insbesondere Motorradkupplung
- mit einem Reibsystem (5),
- mit einem auf das Reibsystem (5) wirkenden Mitnehmer (11), und
- mit einer Feder (4), die über eine Lagerung (8) mit dem Mitnehmer (11) in Wirkverbindung steht, und
die eine Vorspannkraft über eine Druckplatte (9) auf das Reibsystem (5) ausübt,
**dadurch gekennzeichnet,**
- **dass** der Mitnehmer (11) in ein Innenteil (1) und ein gegenüber dem Innenteil (1) um einen definierten Verdrehwinkel (7) verdrehbares Außenteil (2) unterteilt ist,
- **dass** die Feder (4) eine degressive Federkennlinie aufweist, und
- **dass** die Lagerung (8) und das Innenteil (1) über eine eine schiefe Ebene (3) darstellende Rampenanordnung (12, 13) miteinander in Wirkverbindung stehen.

2. Kupplung nach Anspruch 1, **dadurch gekennzeichnet, dass** das Innenteil (1) Nocken (14) und das Außenteil (2) Nocken (15) aufweisen, die zur Übertragung des Kupplungsmoments miteinander in Wirkverbindung bringbar sind.

3. Kupplung nach Anspruch 2, **dadurch gekennzeichnet, dass** im Kupplungs-Ruhezustand und -zugbetrieb die Nocken (14, 15) zur vollen Momentübertragung mit ihren Vorderseiten aneinander anliegen.

4. Kupplung nach Anspruch 1 oder 2, **dadurch gekennzeichnet, dass** im Kupplungsschubbetrieb durch Verdrehen des Innenteils (1) gegenüber dem Außenteil (2) um den definierten Verdrehwinkel (7) die Rückseiten der Nocken (14, 15) in Anlage bringbar sind.

5. Kupplung nach einem der Ansprüche 1 bis 4, **dadurch gekennzeichnet, dass** die Verdrehung des Innenteils (1) gegenüber dem Außenteil (2) durch Ausnutzung des Fahrzeugschubmoments erzeugbar ist.

6. Kupplung nach einem der Ansprüche 1 bis 4, **dadurch gekennzeichnet, dass** zur Verdrehung des Innenteils (1) gegenüber dem Außenteil (2) ein Aktuator vorgesehen ist.

7. Kupplung nach Anspruch 6, **dadurch gekennzeichnet, dass** der Aktuator ein elektrischer oder hydraulischer Aktuator ist.

8. Kupplung nach einem der Ansprüche 1 bis 7, **dadurch gekennzeichnet, dass** die Feder (4) als Tellerfeder ausgebildet ist.

## Claims

1. A vehicle clutch (10), in particular a motorcycle clutch, comprising:
- a friction system (5),
- an engaging member (11) acting on the friction system (5), and
- a spring (4) which is operatively connected to the engaging member (11) through a bearing (8) and which biases the friction system (5) through a pressure plate (9),
**characterized in that**
- the engaging member (11) is divided into an inner portion (1) and an outer portion (2) which may be twisted by a defined twisting angle (7) with respect to the inner portion (1),
- the spring (4) has a degressive spring characteristic, and
- the bearing (8) and the inner portion (1) are operatively connected by a ramp assembly (12, 13) constituting an inclined plane (3).

2. The clutch of claim 1, **characterized in that** the inner portion (1) comprises cams (14) and the outer portion (2) comprises cams (15) which may be operatively interconnected for transmitting a clutch torque.

3. The clutch of claim 2, **characterized in that** the cams (14, 15) abut at their front sides for fully transmitting the torque in an inoperative state and an engaged mode of the clutch.

4. The clutch of claim 1 or 2, **characterized in that**, in an overrun condition of the clutch, the rear sides of the cams (14, 15) may abut by twisting the inner portion (1) with respect to the outer portion (2) by the defined twisting angle (7).

5. The clutch of one of claims 1 to 4, **characterized in that** the twisting of the inner portion (1) with respect to the outer portion (2) may be generated by exploiting the overrun condition of the vehicle

6. The clutch of one of claims 1 to 4, **characterized in that** an actuator is provided for twisting the inner portion (1) with respect to the outer portion (2).

7. The clutch of claim 6, **characterized in that** the actuator is an electric or hydraulic actuator.

8. The clutch of one of claims 1 to 7, **characterized in that** the spring (4) is configured as a disk spring.

## Revendications

1. Embrayage de véhicule (10), en particulier embrayage de motocyclette comprenant
- un système de friction (5),
- un entraînement (11) agissant sur le système de friction (5), et
- un ressort (4) qui est couplé de manière active à l'entraînement (11) via un logement (8), et qui exerce une force de précontrainte sur le système de friction (5) via une plaque de serrage (9),
**caractérisé en ce que**,
- l'entraînement (11) est divisé en une partie intérieure (1) et une partie extérieure (2) pouvant tourner selon un angle de torsion (7) défini par rapport à la partie intérieure (1),
- le ressort (4) présente une courbe caractéristique de ressort dégressive, et
- le logement (8) et la partie intérieure (1) sont couplés de manière active via un agencement de rampes (12, 13) présentant un plan incliné (3).

2. Embrayage selon la revendication 1, **caractérisé en ce que** la partie intérieure (1) comprend des cames (14) et la partie extérieure (2) comprend des cames (15), lesquelles peuvent servir à la transmission du moment d'accouplement par couplage actif.

3. Embrayage selon la revendication 2, **caractérisé en ce que**, dans un état de repos et de fonctionnement en traction de l'embrayage, les cames (14, 15) sont plaquées l'une contre l'autre pour une transmission de couple complète avec leurs faces avant.

4. Embrayage selon la revendication 1 ou 2, **caractérisé en ce que**, lors de l'établissement de la poussée d'embrayage par torsion de la partie intérieure (1) par rapport à la partie extérieure (2) selon l'angle de torsion (7) défini, les faces arrière des cames (14, 15) peuvent être amenées en contact.

5. Embrayage selon l'une des revendications 1 à 4, **caractérisé en ce que** la torsion de la partie intérieure (1) par rapport à la partie extérieure (2) peut être générée en utilisant le couple de propulsion du véhicule.

6. Embrayage selon l'une des revendications 1 à 4, **caractérisé en ce qu'**un actionneur est prévu pour la torsion de la partie intérieure (1) par rapport à la partie extérieure (2).

7. Embrayage selon la revendication 6, **caractérisé en ce que** l'actionneur est un actionneur électrique ou hydraulique.

8. Embrayage selon l'une des revendications 1 à 7, **caractérisé en ce que** le ressort (4) est conformé en ressort à disques.
